# EUROPÄISCHE PATENTANMELDUNG

(11) **EP 2 489 962 A2**
(43) Veröffentlichungstag der Anmeldung: **22.08.2012**
(21) Anmeldenummer: 11450145.5
(22) Anmeldetag: 17.11.2011
(51) Int. Cl.: F24J 2/52, H01L 31/042

(54) **Vorrichtung zur Befestigung von photovoltaischen Kollektoren**

(30) Priorität: 21.02.2011 AT 2252011
(71) Anmelder: Sedelmayer, Rainer, 1100 Wien (AT); Sedelmayer, Roland, 1100 Wien (AT)
(72) Erfinder: Sedelmayer, Rainer, 1100 Wien (AT); Sedelmayer, Roland, 1100 Wien (AT)
(74) Vertreter: Hehenberger, Reinhard

(57) **Zusammenfassung**

Vorrichtung zur Befestigung von photovoltaischen Kollektoren (3) am oberen Ende von Wänden (1), insbesondere von Schallschutzwänden, bestehend aus einer mehrfach abgewinkelten Trageinrichtung (2, insbesondere einem Tragblech, an welchem die photovoltaischen Kollektoren (3) befestigbar sind, sowie zur Aufnahme von Leitungen, Anschlussarmaturen u.dgl.. Dabei weist die Trageinrichtung (2), welche quer zur Wand (1) ausgerichtet ist, in ihrem mittleren Bereich einen ersten Abschnitt auf, welcher zu deren Auflage und Befestigung an der oberen Stirnfläche der Wand (1) dient und ist sie mit einem von der einen Seite des mittleren Abschnittes schräg abragenden zweiten Abschnitt, weiters mit einem von der anderen Seite des mittleren Abschnittes zumindest angenähert im rechten Winkel abragenden dritten Abschnitt (23) sowie mit einem vom dritten Abschnitt schräg abragenden vierten Abschnitt ausgebildet, wobei der zweite Abschnitt und der vierte Abschnitt in einer gemeinsamen Ebene liegen, welche mit dem ersten Abschnitt einen Winkel von 20° bis 60° einschließt und auf welche mindestens ein photovoltaischer Kollektor (3) auflegbar und an der Trageinrichtung (2) befestigbar ist.

## Beschreibung

Die gegenständliche Erfindung betrifft eine Vorrichtung zur Befestigung von photovoltaischen Kollektoren am oberen Ende von Wänden, insbesondere von Schallschutzwänden, bestehend aus einer mehrfach abgewinkelten Trageinrichtung, insbesondere einem Tragblech, an welcher die photovoltaischen Kollektoren befestigbar sind, sowie zur Aufnahme von Leitungen und von Anschlussarmaturen.

Eine derartige Vorrichtung, welche z.B. aus der EP 1837443 B1 bekannt ist, besteht aus einer mehrfach abgewinkelten Trageinrichtung, welche an der oberen Stirnfläche einer Schallschutzwand befestigt ist und welche von einer der beiden Seiten der Schallschutzwand abragt, wobei sich die photovoltaischen Kollektoren seitlich außerhalb dieser Schallschutzwand befinden. Da hierdurch auf die Schallschutzwand sehr große Biegemomente ausgeübt werden, welche einerseits durch das Gewicht der Trageinrichtung sowie der photovoltaischen Kollektoren und andererseits durch auf diese wirkende Windkräfte bedingt werden, muss diese eine sehr große mechanische Festigkeit und insbesondere sehr massive Fundamente aufweisen. Aufgrund dieses Sachverhaltes wird durch die erforderliche sehr stabile Konstruktion der Schallschutzwand, auf welcher eine derartige Vorrichtung montiert wird, ein großer Aufwand bedingt.

Der gegenständlichen Erfindung liegt die Aufgabe zugrunde, eine Vorrichtung zur Befestigung von photovoltaischen Kollektoren so auszubilden, dass diejenige Wand, an welcher sie montiert wird, wesentlich geringeren Belastungen, insbesondere Biegemomenten, ausgesetzt ist, wodurch sie gegenüber dem bekannten Stand der Technik eine wesentlich geringere statische Festigkeit aufweisen kann und dadurch in der Herstellung wesentlich billiger bzw. wesentlich wirtschaftlicher ist.

Diese Aufgabe wird erfindungsgemäß dadurch gelöst, dass die Trageinrichtung für die Befestigung der photovoltaischen Kollektoren, welche quer zur Wand ausgerichtet ist, in ihrem mittleren Bereich einen ersten Abschnitt aufweist, welcher zu deren Auflage und Befestigung an der oberen Stirnfläche der Wand dient, sowie mit einem von der einen Seite des mittleren Abschnittes schräg abragenden zweiten Abschnitt, weiters mit einem von der anderen Seite des mittleren Abschnittes zumindest angenähert im rechten Winkel abragenden dritten Abschnitt und mit einem vom dritten Abschnitt schräg abragenden vierten Abschnitt ausgebildet ist, wobei der zweite Abschnitt und der vierte Abschnitt in einer gemeinsamen Ebene liegen, welche mit dem ersten Abschnitt einen Winkel von 20° bis 60° einschließt und auf welche mindestens ein photovoltaischer Kollektor auflegbar und an der Trageinrichtung befestigbar ist.

Vorzugsweise schließt an den vierten Abschnitt ein fünfter Abschnitt an, welcher mit dem vierten Abschnitt einen Winkel von 90° bis 150°, insbesondere von etwa 120°, einschließt. Insbesondere schließen in der an einer an der Stirnfläche der Wand befestigten Lage der Trageinrichtung der zweite und der vierte Abschnitt mit der Horizontalebene einen Winkel von 20° bis 60° ein.

Nach einer bevorzugten Ausführungsform ist die Trageinrichtung in ihrem ersten Abschnitt mit Bohrungen ausgebildet, die von Bolzen durchsetzt sind, mittels welcher die Trageinrichtung an der Stirnfläche der Wand befestigbar ist. Weiters sind vorzugsweise in der an einer Wand befestigten Lage der Trageinrichtung mit den photovoltaischen Kollektoren in dem vom ersten Abschnitt, vom zweiten Abschnitt und von den photovoltaischen Kollektoren umschlossenen Raum Kabel, Armaturen u.dgl. angeordnet. Zudem kann die Trageinrichtung im zweiten und im vierten Abschnitt mit U-förmigen Ausnehmungen zur Befestigung von Montageseilen od.dgl. ausgebildet sein und kann die Trageinrichtung im Anschlussbereich zwischen dem ersten Abschnitt und dem dritten Abschnitt mit Ausnehmungen ausgebildet ist, welche als Abflussöffnungen für Wasser dienen.

Zur lösbaren Befestigung der photovoltaischen Kollektoren an der Trageinrichtung ist vorzugsweise die Trageinrichtung mit mindestens einem Verriegelungselement ausgebildet, von welchem ein Bolzen abragt, welcher in einer zugeordneten in der Trageinrichtung vorgesehenen L-förmigen Führung verstellbar ist, wobei das mindestens eine Verriegelungselement über einen Schenkel eines Tragrahmens für die photovoltaischen Kollektoren verstellbar ist, wodurch der Tragrahmen an der Trageinrichtung verriegelbar ist. Vorzugsweise ist weiters der Bolzen im Verriegelungselement verschraubbar.

Der Gegenstand der Erfindung ist nachstehend anhand eines in der Zeichnung dargestellten Ausführungsbeispieles näher erläutert. Es zeigen:
- FIG.1: zwei Wandelemente einer Schallschutzwand, an deren oberer Stirnfläche zwei Trageinrichtungen für photovoltaische Kollektoren befestigt sind, in axonometrischer Darstellung,
- FIG.2: die beiden Wandelemente der Schallschutzwand mit an diesen befestigten Trageinrichtungen gemäß FIG.1, wobei auf den Trageinrichtungen jeweils drei photovoltaische Kollektoren befestigt sind, in axonometrischer Darstellung,
- FIG.3: die Schallschutzwand mit auf dieser befestigten Trageinrichtungen und photovoltaischen Kollektoren gemäß FIG.2, in Seitenansicht,
- FIG.4: die Schallschutzwand mit auf dieser befestigten Trageinrichtungen und photovoltaischen Kollektoren gemäß FIG.2, in Seitenansicht und in schematisierter Darstellung,
- Fig.5: die Trageinrichtung mit konstruktiven Elementen, in axonometrischer Darstellung,
- FIG.6: zwei Wandelemente der Schallschutzwand und eine diesen Abschnitten zugeordnete Trageinrichtung bei deren Montage, in axonometrischer Darstellung,
- FIG.7: die Trageinrichtung und einen photovoltaischen Kollektor, in Draufsicht und teilweise in aufgebrochener Darstellung,
- FIG.7a: den Querschnitt nach der Linie A-A der FIG.7 zur Darstellung der Befestigung des photovoltaischen Kollektors an der Trageinrichtung,
- FIG.7b: einen Querschnitt durch eine zweite Ausführungsform der Befestigung der photovoltaischen Kollektoren an der Trageinrichtung, und
- FIG.7c: einen Querschnitt durch eine dritte Ausführungsform der Befestigung der photovoltaischen Kollektoren an der Trageinrichtung.

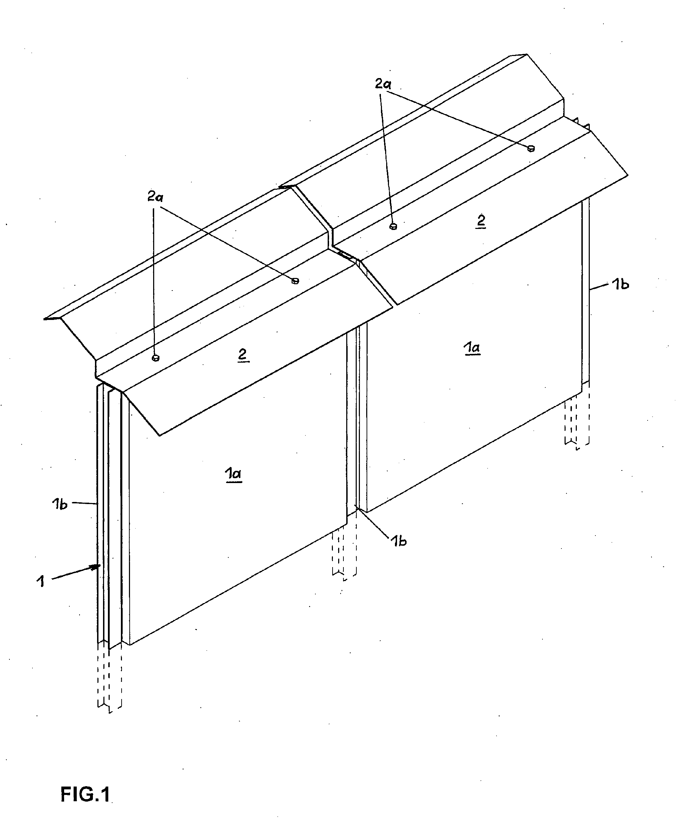

In FIG.1 sind zwei aneinander gefügte Wandelemente 1a einer Schallschutzwand 1 dargestellt, welche an im Boden verankerten, vertikal ausgerichteten Schienen 1b befestigt sind und an deren oberen Stirnflächen jeweils eine Trageinrichtung 2 für photovoltaische Kollektoren befestigt ist, wobei diese Trageinrichtungen 2 von der Schallschutzwand 1 auf beiden Seiten angenähert in gleichen Längen von dieser abragen. Die Befestigung der Trageinrichtungen 2 erfolgt mittels Bolzen 2a, welche in Bohrungen, die sich in der oberen Stirnfläche der Wandelemente 1a befinden, eingesetzt sind.

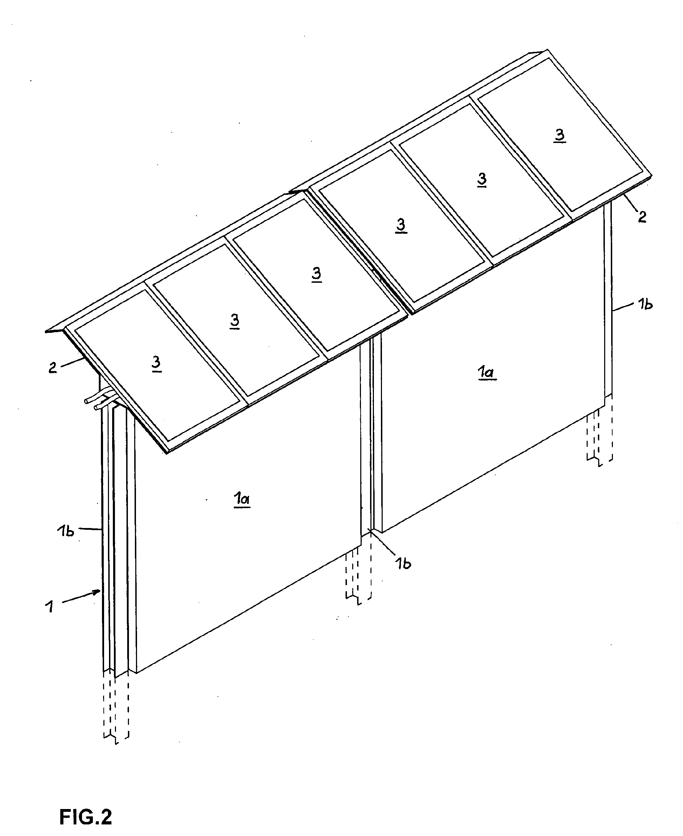

In FIG.2 sind wiederum zwei Wandelemente 1a der Schallschutzwand 1 und weiters die an deren oberen Stirnflächen befestigten zwei Trageinrichtungen 2 dargestellt, wobei auf jeder Trageinrichtung 2 jeweils drei photovoltaische Kollektoren 3 befestigt sind. Die Wandelemente 1a weisen z.B. eine Länge von 3 m auf. Weiters weisen die Trageinrichtungen 2 quer zur Wand 1 z.B. eine Breite von 1,5 m und in Längsrichtung der Wand 1 z.B. eine Länge von 3 m auf. Das Gewicht der Trageinrichtungen beträgt etwa 40 kp bis 60 kp.

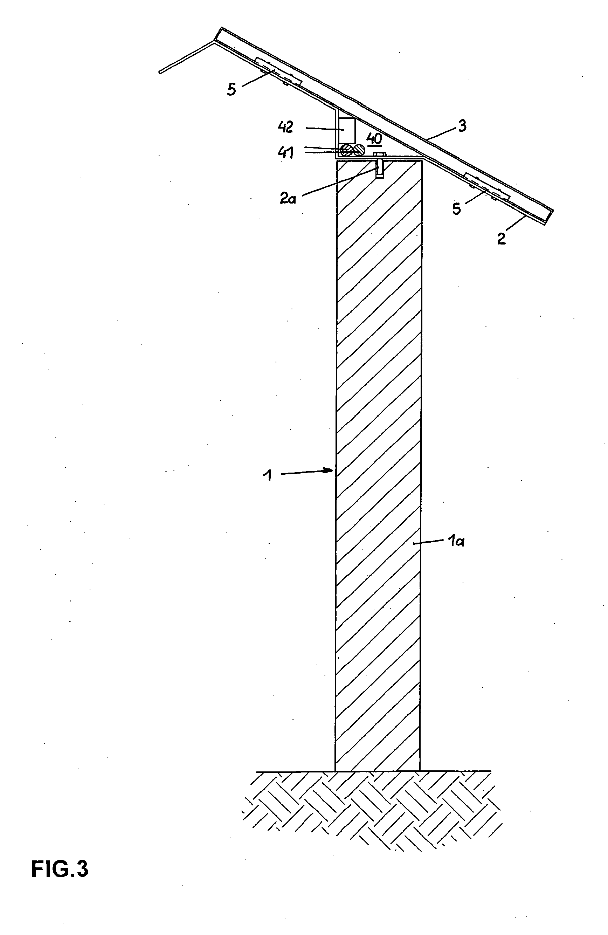

In FIG.3 sind die Schallschutzwand 1, eine an deren obere Stirnfläche mittels Bolzen 2a befestigte Trageinrichtung 2 und ein an dieser befestigter photovoltaischer Kollektor 3 dargestellt. Weiters ist daraus ersichtlich, dass sich in dem dreieckigen Raum 40, welcher sich zwischen der Trageinrichtung 2 und den photovoltaischen Kollektoren 3 befindet, elektrische Kabel 41, Elektroarmaturen 42 u.dgl. angeordnet sind. Weiters sind Einrichtungen 5 für die Befestigung der photovoltaischen Kollektoren 3 an der Trageinrichtung 2 vorgesehen.

Aus dieser Darstellung ist insbesondere ersichtlich, dass sich die Trageinrichtung 2 und die auf dieser befestigten photovoltaischen Kollektoren 3 auf beiden Seiten der Schallschutzwand 1 von dieser angenähert gleich weit weg erstrecken, wodurch durch das Gewicht der Trageinrichtung 2 und der photovoltaischen Kollektoren 3 auf die Schallschutzwand 1 nahezu keine Biegemomente ausgeübt werden. Hierdurch kann die Schallschutzwand 1 gegenüber dem bekannten Stand der Technik eine wesentlich verminderte Festigkeit aufweisen.

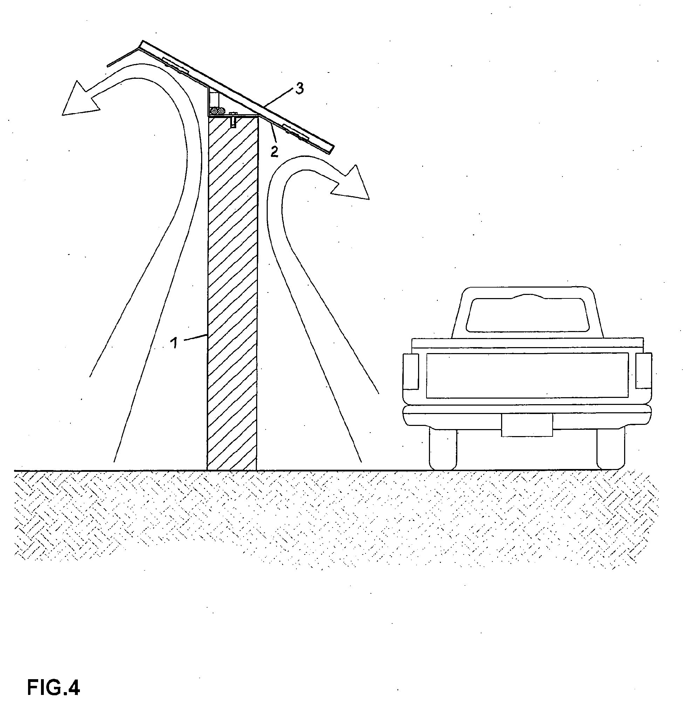

In FIG.4 ist dargestellt, dass durch die Ausbildung der Trageinrichtung 2 für die photovoltaischen Kollektoren 3 deshalb, da diese auf beiden Seiten über die Schallschutzwand 1 auskragen, auf beiden Seiten eine Verbesserung in der Schalldämmwirkung erzielt wird.

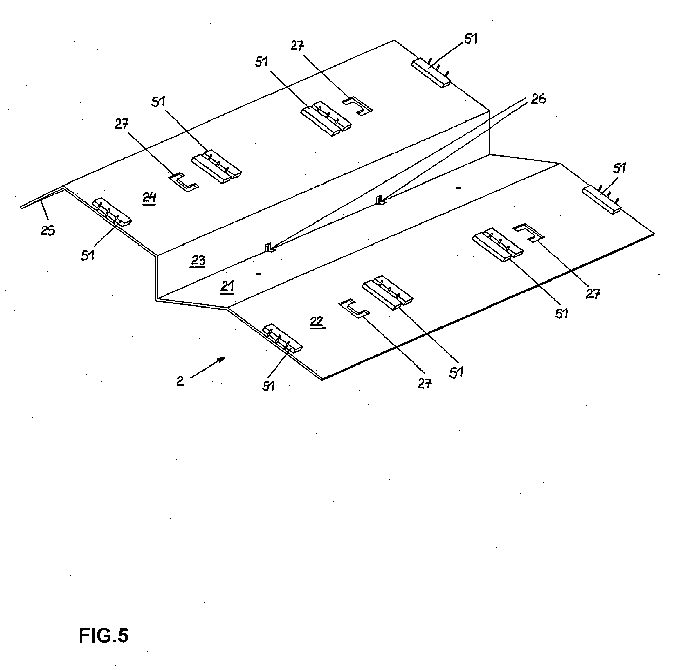

Wie dies aus FIG. 5 ersichtlich ist, weisen die Trageinrichtungen 2, welche insbesondere aus Blech hergestellt sind, einen ersten mittleren Abschnitt 21 auf, an welchen auf einer Seite ein schräg abragender zweiter Abschnitt 22 anschließt. Auf der anderen Seite schließt an den ersten Abschnitt 21 im rechten Winkel zu diesem ein dritter Abschnitt 23 an, an welchen ein von diesem schräg abragender vierter Abschnitt 24 anschließt. An den vierten Abschnitt 24 schließt in einem stumpfen Winkel von 90° bis 150° ein fünfter Abschnitt 25 an. Der erste mittlere Abschnitt 21 ist dazu vorgesehen, auf der oberen Stirnfläche der Schallschutzwand 1 befestigt zu werden.

Die Abschnitte 22 und 24, welche in einer gemeinsamen Ebene liegen, die in der Betriebslage mit der Horizontalebene einen Winkel zwischen 20° und 60° einschließt, dienen als Auflagefläche für die photovoltaischen Kollektoren 3. Im Bereich der Kante längs der Abschnitte 21 und 23 sind Öffnungen 26 vorgesehen, welche als Ablauföffnungen für Wasser dienen. Zudem sind Verriegelungsplatten 51 vorgesehen, welche zur Befestigung der photovoltaischen Kollektoren 3 an der Trageinrichtung 2 dienen. Weiters sind die Abschnitte 22 und 24 mit U-förmigen Ausnehmungen 27 ausgebildet, welche als Montagehilfen dienen.

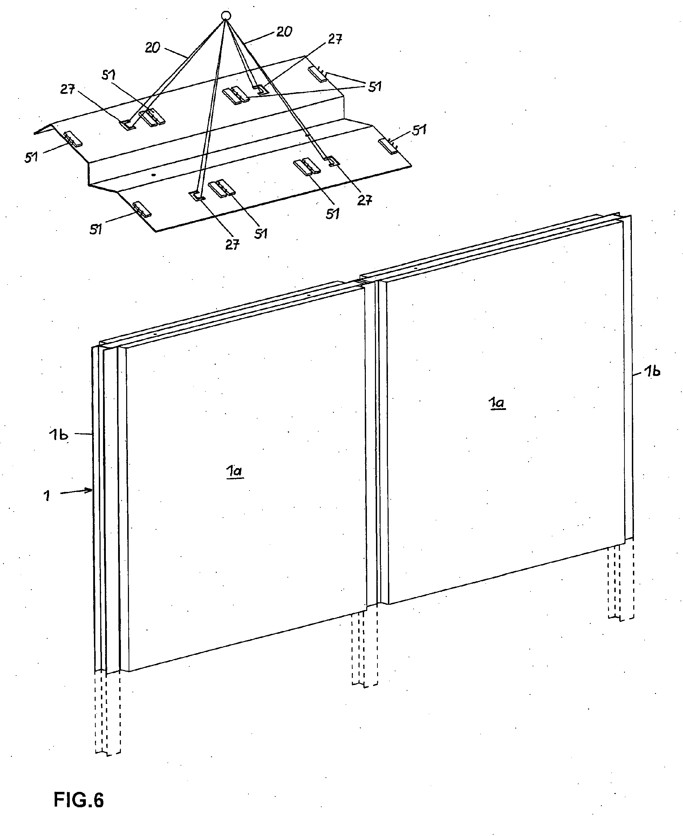

Es wird hierzu auf die Darstellung der FIG.6 verwiesen, aus welcher ersichtlich ist, dass in diese Ausnehmungen 27 Montageseile 20 einhängbar sind, mittels welcher die Trageinrichtungn 2, welche ein Gewicht von etwa 40 kp aufweisen, auf die Schallschutzwand 1 aufsetzbar sind. Nach der Befestigung der Trageinrichtungen 2 auf der Schallschutzwand 1 werden auf diese die photovoltaischen Kollektoren 3 aufgesetzt und an diesen z.B. mittels der Verriegelungsplatten 51 befestigt.

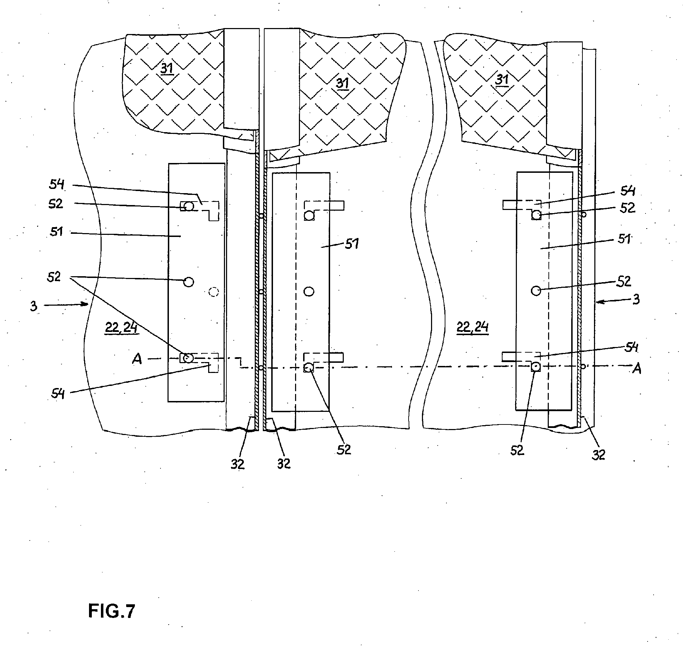

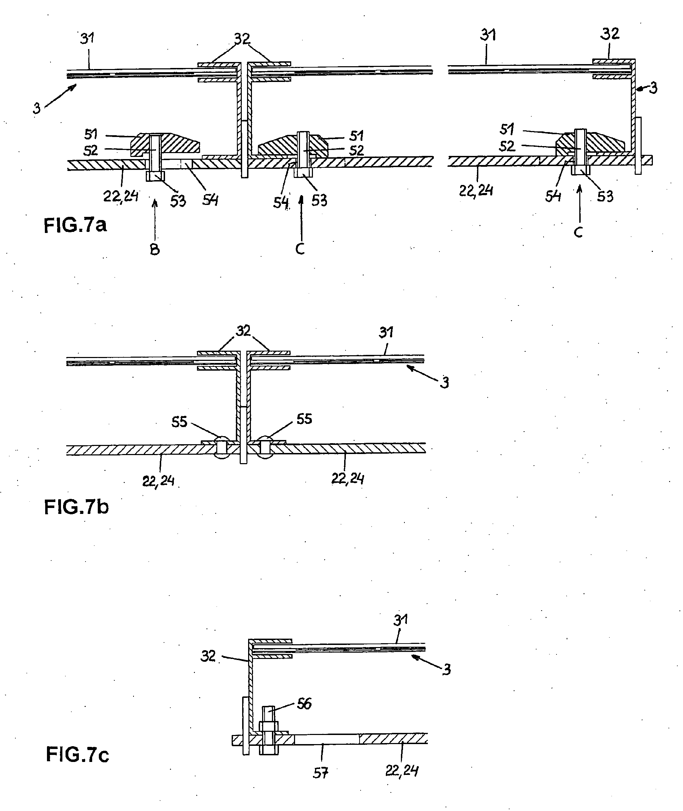

In den FIG.7 und 7a sind die Abschnitte 22 bzw. 24 zweier einander anschließender Trageinrichtungen 2, weiters die die photovoltaischen Zellen enthaltenden photovoltaischen Kollektorplatten 31 und die Rahmen 32 der photovoltaischen Kollektoren 3, von welchen die Kollektorplatten 31 gehalten sind und welche an den Trageinrichtungen 2 befestigbar sind, dargestellt.

Zur Befestigung der photovoltaischen Elemente 3 an den Trageinrichtungen 2 sind die Trageinrichtungen 2 mit Verriegelungsplatten 51 ausgebildet, von welchen Schraubbolzen 52 mit Bolzenköpfen 53 abragen, und sind weiters die Trageinrichtungen 2 mit L-förmigen Führungsschlitzen 54 ausgebildet, welche von den Schraubbolzen 52 durchsetzt sind. Durch Längsverstellung der Schraubbolzen 52 in den Führungsschlitzen 54 werden die Verriegelungsplatten 51 von einer ersten Lage, in welcher sie sich vom Tragrahmen 32 im Abstand befinden, wie dies aus dem Detail B ersichtlich ist, in eine zweite Lage bewegt, in welcher sie einen Schenkel des zugeordneten Tragrahmens 32 übergreifen, durch Querverstellung in den Querschlitzen verriegelt und durch Verschraubung der Schraubbolzen 52 in den Verriegelungsplatten 51 festgezogen, wie dies aus dem Detail C ersichtlich ist, wodurch die Tragrahmen 32 und damit die photovoltaischen Kollektoren 3 an den Trageinrichtungen 2 befestigt sind.
Durch die Verriegelungsplatten 51 und die Schraubbolzen 52, welche in den L-förmigen Führungsschlitzen 54 verstellbar sind und welche einen Bestandteil der Trageinrichtung 3 bilden, wird eine einfache und wirkungsvolle Befestigung der photovoltaischen Kollektoren 3 an den Trageinrichtungen 2 bewirkt.

Gemäß der in FIG.7b dargestellten Ausführungsvariante sind die Tragrahmen 32 für die Kollektorplatten 31 an den Trageinrichtungen 2 durch Nieten 55 befestigt.
Gemäß der in FIG.7c dargestellten Ausführungsform sind die Tragrahmen 32 für die Kollektorplatten 31 mittels Schraubbolzen 56, welche durch in den Abschnitten 22 bzw. 24 vorgesehene Montageöffnungen 57 hindurch zugänglich sind, wie einsetzbar bzw. lösbar sind, an den Abschnitten 22 bzw. 24 befestigt.

## Patentansprüche

1. Vorrichtung zur Befestigung von photovoltaischen Kollektoren (3) am oberen Ende von Wänden (1), insbesondere von Schallschutzwänden, bestehend aus einer mehrfach abgewinkelten Trageinrichtung (2), insbesondere einem Tragblech, an welchem die photovoltaischen Kollektoren (31) befestigbar sind, sowie zur Aufnahme von Leitungen (41), Anschlussarmaturen (42) u.dgl., **dadurch gekennzeichnet, dass** die Trageinrichtung (2), welche quer zur Wand (1) ausgerichtet ist, in ihrem mittleren Bereich einen ersten Abschnitt (21) aufweist, welcher zu deren Auflage und Befestigung an der oberen Stirnfläche der Wand (1) dient und mit einem von der einen Seite des mittleren Abschnittes (21) schräg abragenden zweiten Abschnitt (22), weiters mit einem von der anderen Seite des mittleren Abschnittes (21) zumindest angenähert im rechten Winkel abragenden dritten Abschnitt (23) sowie mit einem vom dritten Abschnitt (23) schräg abragenden vierten Abschnitt (24) ausgebildet ist, wobei der zweite Abschnitt (22) und der vierte Abschnitt (24) in einer gemeinsamen Ebene liegen, welche mit dem ersten Abschnitt einen Winkel von 20° bis 60° einschließt und auf welche mindestens ein photovoltaischer Kollektor (3) auflegbar und an der Trageinrichtung (2) befestigbar ist.

2. Vorrichtung nach Patentanspruch 1, **dadurch gekennzeichnet, dass** an den vierten Abschnitt (24) ein fünfter Abschnitt (25) anschließt, welcher mit dem vierten Abschnitt (24) einen Winkel von 90° bis 150°, insbesondere von etwa 120° einschließt.

3. Vorrichtung nach einem der Patentansprüche 1 und 2, **dadurch gekennzeichnet, dass** in der an einer an der Stirnfläche der Wand (1) befestigten Lage der Trageinrichtung (2) der zweite und der vierte Abschnitt (22, 24) mit der Horizontalebene einen Winkel von 20° bis 60° einschließen.

4. Vorrichtung nach einem der Patentansprüche 1 bis 3, **dadurch gekennzeichnet, dass** die Trageinrichtung (2) in ihrem ersten Abschnitt (21) mit Bohrungen ausgebildet ist, die von Bolzen (2a) durchsetzt sind, mittels welcher die Trageinrichtung an der Stirnfläche der Wand (1) befestigbar ist.

5. Vorrichtung nach einem der Patentansprüche 1 bis 4, **dadurch gekennzeichnet, dass** in der an einer Wand (1) befestigten Lage der Trageinrichtung (2) mit den photovoltaischen Kollektoren (31) in dem vom ersten Abschnitt (21), vom zweiten Abschnitt (22) und von den photovoltaischen Kollektoren (3) umschlossenen Raum (40) Kabel (41), Armaturen (42) u.dgl. angeordnet sind.

6. Vorrichtung nach einem der Patentansprüche 1 bis 5, **dadurch gekennzeichnet, dass** die Trageinrichtung (2) im zweiten und im vierten Abschnitt (22, 24) mit U-förmigen Ausnehmungen (27) zur Befestigung von Montageseilen (20) od.dgl. ausgebildet ist.

7. Vorrichtung nach einem der Patentansprüche 1 bis 6, **dadurch gekennzeichnet, dass** die Trageinrichtung (2) im Anschlussbereich zwischen dem ersten Abschnitt (21) und dem dritten Abschnitt (23) mit Ausnehmungen (26) ausgebildet ist, welche als Abflussöffnungen für Wasser dienen.

8. Vorrichtung nach einem der Patentansprüche 1 bis 7, **dadurch gekennzeichnet, dass** die Trageinrichtung (2) mit mindestens einem Verriegelungselement (51) ausgebildet ist, von welchem ein Bolzen (52) abragt, welcher in einer in der Trageinrichtung (2) vorgesehenen L-förmigen Führung (54) verstellbar it, wobei das mindestens eine Verriegelungselement (51) über einen Schenkel eines Tragrahmens (32) für die photovoltaischen Kollektoren (3) verstellbar ist, wodurch der Tragrahmen (32) an der Trageinrichtung (2) verriegelbar ist.

9. Vorrichtung nach Patentanspruch 8, **dadurch gekennzeichnet, dass** der Bolzen (52) im Verriegelungselement (51) verschraubbar ist.
